# EUROPEAN PATENT APPLICATION

(11) **EP 1 748 288 A1**
(43) Date of publication of application: **31.01.2007**
(21) Application number: 06015268.3
(22) Date of filing: 21.07.2006
(51) Int. Cl.: G01K 1/10

(54) **Temperature-sensing device**

(30) Priority: 25.07.2005 JP 2005214170
(71) Applicant: Hitachi, Ltd., Tokyo 100-8280 (JP)
(72) Inventor: Abe, Hiroyuki, 1-chome Chiyoda-ku Tokyo 100-8220 (JP)
(74) Representative: Beetz & Partner

(57) **Abstract**

The invention relates to improving the resistance to corrosion and reliability in a temperature sensor (15) with a lead wire (3, 22). The present invention relates to a temperature-sensing device including an element with a resistance value varying with a temperature change, a lead extending on the axis of the element, and a resin coat (5) surrounding the element, wherein a number of hydrophobic inorganic fillers with an average particle size of 5 µm or less exist on a surface of the resin coat (5). The present invention also relates to a temperature sensor (15) including an element with a resistance value varying with a temperature change, a sealing electrode (2) electrically connected to each of both ends of the element, a lead wire (3, 22) electrically connected to each of the sealing electrodes (2) and extending on the axis direction of a composite body formed of the element and the sealing electrode (2), an inorganic insulating member surrounding the element and covering at least part of the sealing electrodes (2) to fix the element and the sealing electrodes (2), and a resin coat (5) covering at least a connecting portion between the electrode and the lead wire (3, 22), wherein a number of hydrophobic inorganic fillers with an average particle size of 5 µm or less exist on a surface of the resin coat (5).

## Description

### Field of the Invention

The present invention relates to a temperature-sensing device which is an electronic component such as a temperature sensor and a temperature-sensitive resistor, and more particularly, to an electronic component such as a temperature-sensing device with high resistance to corrosion suitable for use as a temperature sensor having lead wire which measures the temperature of intake air in an automobile and which is used in an environment where the component is susceptible to corrosion and electrolytic corrosion,

Thus, the present invention technically relates to a device having the function of changing a resistance value with a temperature change, for example, a temperature sensor and a temperature-sensitive resistor device.

### Background of the Invention

Many temperature sensors, which are thermistors using a device having the function of changing physical properties such as a resistance value with a temperature change, have been used in consumer electronics. In recent years, such sensors have been employed increasingly in automobiles. The temperature sensors are used in automobiles to monitor the temperature of intake air and the temperature of each portion of an automobile or to perform control. The temperature sensors employed in automobiles which are used in harsh environments require higher reliability than in consumer products, particularly excellent durability in an environment which needs resistance to corrosion.

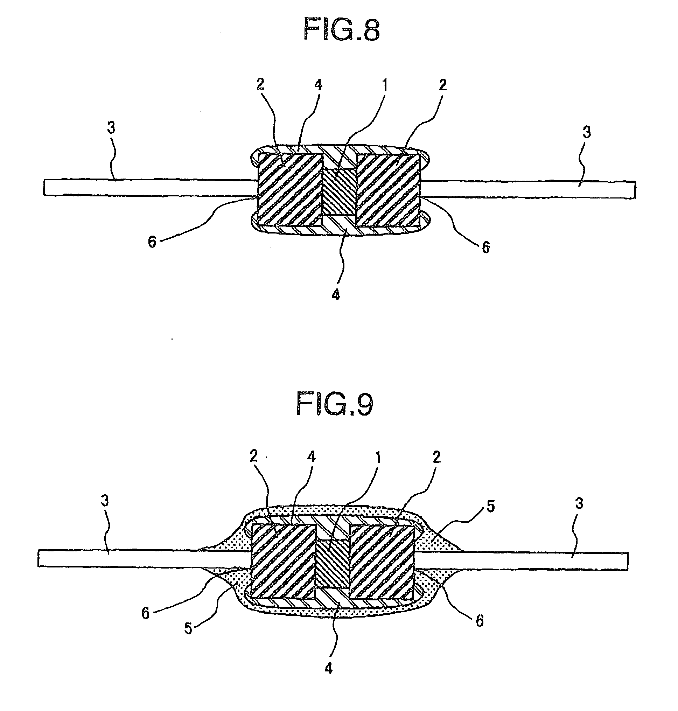

Fig. 8 is a section view showing a conventional temperature sensor using a thermistor chip. The structure of the thermistor will hereinafter be described with Patent Document 1 as an example. A thermistor chip 1 having the property of changing a resistance value and the like with a temperature change is sealed by sealing electrodes 2 and a glass tube 4. The sealing electrode is often formed of dumet which has cuprous oxide (Cu₂O) including copper as an intermediate layer formed on the surface of a cylinder made of an alloy of iron and nickel.

The glass tube is used to hold and seal the thermistor chip and the sealing electrodes. The thermistor chip 1 and the sealing electrodes 2 connecting to electrodes on both ends of the thermistor chip 1 are disposed in the glass tube 4. The glass is calcined to chemically bond with the cuprous oxide on the surface of the sealing electrodes to the glass, thereby fixing the thermistor chip and the sealing electrodes by the glass tube.

The sealing electrode 2 is previously connected to a lead wire 3 made of conductive metal such as nickel lead and iron-nickel alloy lead. The thermistor having the lead is commonly called an axial type in which a welded part 6 of the lead to the sealing electrode is exposed. Therefore, if salt water adheres to the exposed welded part, corrosion may occur.

For automobiles, the lead wire or the entire weld including the lead wire is nickel-plated or tin-plated as measures to prevent corrosion. However, the plating is porous microscopically and the basis material is often exposed partially. Since it is difficult to form a complete coat with the plating, it cannot be said that the perfect anti-corrosion structure is provided. Particularly, a snow-melting agent spread onto streets in winter is made of NaCl (sodium chloride), KCl (potassium chloride) or the like, and if these are dissolved in water, they become ionic solution which passes through an air cleaner during driving of an automobile. As a result, the salt water is directly taken into an air flow meter provided downstream from the air cleaner.

The thermistor for temperature measurement is disposed in the air flow meter such that the thermistor is exposed to the taken air flow, and the salt water directly adheres thereto. When the leads are bridged with the salt water, a leakage of current may cause an error in temperature measurement and electrolytic corrosion.

Another example of the structure for preventing corrosion disclosed in Patent Document 2 is a method for coating the entire thermistor including leads with a resin. The disclosed example differs from the present invention in the structure of a temperature-sensitive resistor and the structure of arrangement, and an epoxy resin is used as a main member of the coat film in the disclosed example.

It cannot be said that the use of the epoxy resin is an effective approach to prevent the abovementioned electrolytic corrosion due to the adhesion of the salt water since the epoxy resin has no hydrophobic group in its molecular structure and does not easily repel salt water adhering to the epoxy resin.
(Patent Document 1) JP-A-10-55903
(Patent Document 2) JP-B-3039277

### Brief Summary of the Invention

The problem to be solved by the present invention is how to improve the anti-corrosion of a temperature sensor mounted on an automobile such as a thermistor in which electrolytic corrosion easily occurs due to adhesion of water or salt water. The electrolytic corrosion in a temperature-sensing device such as a temperature sensor and a temperature-sensitive resistor provided by the present invention is a phenomenon in which a liquid containing a conductive material such as ions adheres to the surface of an insulating coat of the device, and then, as the adhering amount increases to connect lead wires, an electrochemical cell is formed at the connection between the lead wire and an electrode and corrodes the connection between the lead wire and the electrode or its vicinities. Thus, in order to prevent the electrolytic corrosion, it is necessary to avoid the liquid containing ions from adhering to or remaining on the surface of the insulating coat to eliminate electric connection between the lead wires.

The present invention relates to a temperature-sensing device which may include an element with a resistance value varying with a temperature change, a lead extending on the axis of the element, and/or a resin coat surrounding the element, wherein a number of hydrophobic inorganic fillers with an average particle size of 5 µm or less may exist on a surface of the resin coat.

The present invention may provide a temperature sensor which may include an element with a resistance value varying with a temperature change, a sealing electrode which may be electrically connected to each of both ends of the element, a lead wire which may be electrically connected to each of the sealing electrodes and/or extending on the axis direction of a composite body formed of the element and/or the sealing electrode, an inorganic insulating member which may surround the element and/or cover at least part of the sealing electrodes to fix the element and/or the sealing electrodes, and/or a resin coat which may cover at least a connecting portion between the electrode and/or the lead wire, wherein a number of hydrophobic inorganic fillers with an average particle size of 5 µm or less may exist on a surface of the resin coat.

Other objects, features and advantages of the invention will become apparent from the following description of the embodiments of the invention taken in conjunction with the accompanying drawings.

The above features may be combined partly or as a whole in any way.

### Brief Description of the Drawings

Fig. 1 is a section view showing the structure of a temperature sensor according to an example of the present invention;
Fig. 2 is a schematic diagram showing the surface of hydrophobic fillers;
Fig. 3 is a section view showing the structure of a temperature sensor according to another example of the present invention;
Fig. 4 is a section view showing the structure of a fuel path of an internal combustion engine including a thermal flow meter;
Fig. 5 is a section view showing the structure of a temperature-sensitive resistor in the thermal flow meter;
Fig. 6 is a section view showing the structure of a temperature-sensitive resistor according to another example in the thermal flow meter;
Fig. 7 is a section view showing the structure of a temperature-sensitive resistor according to another example in the thermal flow meter;
Fig. 8 is a section view showing the structure of a conventional general-purpose thermistor (a temperature sensor); and
Fig. 9 is a section view showing the structure of another conventional thermistor coated with a resin.

### Description of Reference Numerals

- 1: THERMISTOR CHIP
- 2: SEALING ELECTRODE
- 3: LEAD WIRE
- 4: GLASS TUBE
- 5: RESIN COAT
- 6: LEAD WELD
- 7: SILICA FILLER
- 8: FIRST LAYER COAT
- 9: SECOND LAYER COAT
- 10: HEATING RESISTOR
- 11: TEMPERATURE-SENSITIVE RESISTOR
- 12: FIXED-TEMPERATURE CONTROL CIRCUIT
- 13: BODY
- 14: SECONDARY PATH
- 15: TEMPERATURE SENSOR
- 16: CASE
- 17: TERMINAL
- 18: PROTECTIVE FILM
- 19: CERAMIC BODY
- 20: THIN FILM
- 21: TRIMMED GROOVE
- 22: LEAD WIRE
- 23: CAP
- 24: CONDUCTIVE ADHESIVE
- 25: GLASS ADHESIVE
- 26: RESISTOR WIRE

### Detailed Description of the Invention

As the best mode for providing a temperature sensor reliably used under corrosive environments, 5 wt% of more of silica fillers or fillers including organic groups such as methyl groups which are hydrophobic groups on its surface are contained in a resin which coats a connection of lead wires or the entire glass tube for holding a thermistor chip and electrodes including the connection of the lead wires.

The inorganic fillers having hydrophobicity preferably have an average particle diameter of 5 µm or less, and more particularly 0.1 to 1 µm. The inorganic fillers are preferably made of silica (SiO₂), and particularly, fumed silica.

The organic hydrophobic groups can be coordinated with the surface of the inorganic fillers to further increase the hydrophobicity. In this case, the adhesion is improved between the inorganic fillers having the hydrophobic groups and the resin. The amount of the organic compound having the organic hydrophobic groups is preferably approximately 5 to 50 wt% relative to the resin.

The hydrophobic inorganic fillers or the inorganic fillers having the organic hydrophobic groups are made of silica (SiO₂), calcium carbonate (CaCO₃), carbon, or titanium oxide (TiO₂). The compounding ratio of the inorganic fillers to the resin is preferably 1 to 50 wt%. When the inorganic fillers are caused to adhere to the surface of the resin coat, the ratio thereof is preferably 1 to 20 wt% relative to the resin. When the inorganic fillers are added into the resin, the ratio thereof is preferably 5 to 50 wt%. In the latter case, the ratio is more preferably 10 to 40 wt%, and most preferably 20 to 30 wt%,

The temperature sensor preferably has a resin coat which covers at least the connection between the electrode and the lead wire or a resin coat formed on an undercoat formed on the surface of the inorganic insulating member. The resin coat is preferably formed by dispersing the hydrophobic inorganic fillers. The undercoat and the resin coat are preferably made of the same type of resin material. The resin coat is formed and then the fillers having the hydrophobic groups are caused to adhere to its surface, thereby providing hydrophobicity for the resin surface. Thus, in this case, the inorganic fillers or the inorganic fillers having hydrophobic groups may or may not be added into the resin which forms the coat.

The present invention will hereinafter be described with Examples.

### (Example 1)

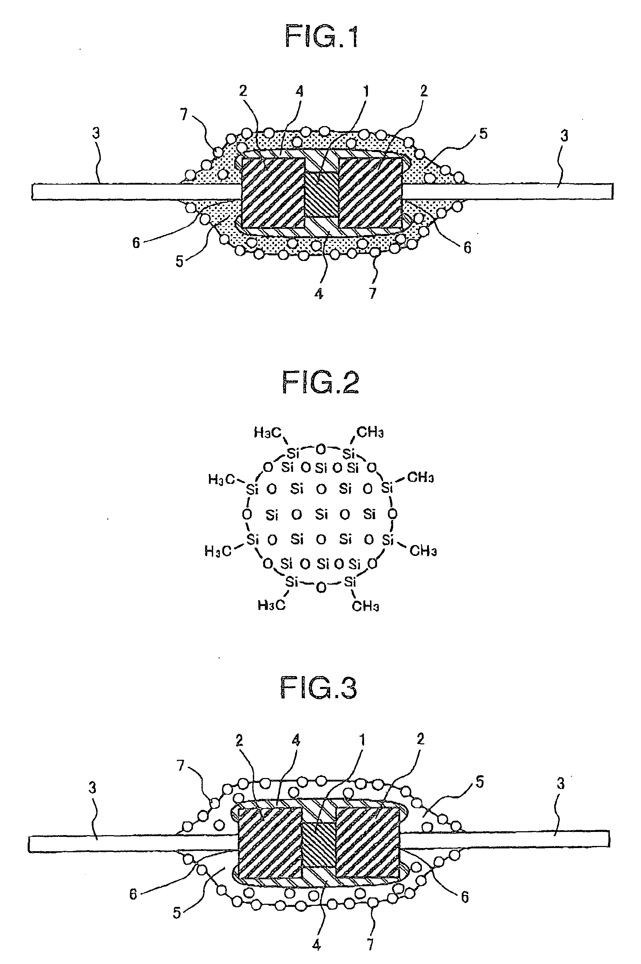

First, the problems of a conventional temperature sensor will be described with reference to Fig. 9. Fig. 9 shows the sectional structure of a conventional thermistor (a temperature sensor) using a thermistor chip commonly called as an axial type. Fig. 1 is a section view of a thermistor according to the present invention.

The structure of the temperature sensor according to the present invention using the thermistor chip will be described with reference to Fig. 9. Reference numeral 1 shows the thermistor chip formed of a semiconductor having properties (such as a resistance value) which vary with a temperature change. Electrodes (not shown) for detecting signals are provided on both ends of the thermistor chip 1. A sealing electrode 2 is connected to each of the electrodes on both ends of the thermistor chip 1 in the way electrical conductivity is not lost.

The sealing electrode 2 is often formed of dumet which has cuprous oxide (Cu₂O) including copper as an intermediate layer formed on the surface of a cylinder made of an alloy of iron and nickel. A lead wire 3 is previously welded to the sealing electrode 2. The abovementioned thermistor chip 1 and the sealing electrodes 2 welded to the lead wires 3 made of a conductive member such as nickel, stainless steel, or an alloy of iron and nickel are put in a glass tube 4 for holding the thermistor chip 1.

The glass tube 4 has a length equal to the dimensions of the thermistor chip 1 and the sealing electrodes 2 disposed on both ends thereof. After they are aligned, they are heated to melt and chemically bond with the cuprous oxide on the surface of the sealing electrodes 2 and the glass tube 4, thereby fixing the thermistor chip 1 and the sealing electrodes 2 by the glass tube 4. In addition, the entire glass tube 4 including each welded part 6 of the lead wire 3 to the sealing electrode 2 is coated with a resin 5.

For consumer products, the temperature sensor of the structure shown in Fig. 9 has sufficient useful life and reliability to corrosion. However, when it is used as an electronic device mounted on an automobile, a problem of reliability may occur. The automobiles are used in very harsh conditions and the warranty period is required to be much longer than that of consumer products. Particularly, it can be said that an engine room is always exposed to salt water produced by dissolving in water a snow-melting agent dispersed onto streets in winter, ordinary water, or a corrosive gas such as a sulfide gas, an acid gas, and a nitrogen oxide gas. Thermistor products for mounting on automobiles which have penetrated the market are made by coating the entire glass tube 4 including the lead welded part 6 with the resin 5 having excellent water resistance and water repellency such as an epoxy resin and a polyamide resin.

The resin 5 coats the welded part 6 of the easily corroding lead wire 3 and the sealing electrode 2 to ensure reliability for a corrosive gas. However, when an ionic solution such as salt water adheres to the leads which are then bridged, electric current supplied to the thermistor is leaked to significantly increase errors in a temperature measurement signal. In addition, the current leakage may cause electrolytic corrosion.

These are caused by the facts that most of the resin coats 5 have the low water repellency. Since water or salt water which is once adhered between the leads does not drop but stays there, a leakage of current continuously occurs, which may cause increased errors in temperature measurement and electrolytic corrosion. Resin members for the resin coat 5 are limited at present. An epoxy resin is most frequently used as the resin coat member 5.

Formula (1) shows a typical opened molecular structure of a bisphenol A type epoxy which is a general epoxy resin. A methyl group (CH₃) is attached to a side chain of bisphenol A which is a main ingredient of the epoxy resin. Apparently, the methyl group (CH₃) which is a hydrophobic group is present, so that the epoxy resin is considered as a hydrophobic material. However, when water droplet is dropped on the surface of the epoxy resin, the water droplet adheres to the surface of the epoxy resin and is not repelled. As seen from the molecular structure of the epoxy resin shown in formula (1), the epoxy resin contains methylene (CH₂) given to a benzene nucleus, and the methylene (CH₂) is small relative to the molecular size of the benzene nucleus and thus the molecular structure is uneven. Since the resin includes many spacings at the molecular level, the molecules of the methyl group (CH₃) having hydrophobicity are too dispersed to provide sufficient water repellency. (1)

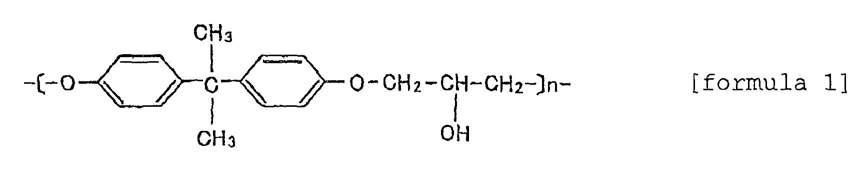

Nylon 6 shown in formula (2) which is a polyamide resin is a resin material used for the resin coat member 5 other than the epoxy resin. Since the nylon 6 has no methyl group (CH₃) and the molecular structure has no hydrophobic group, the water repellency cannot be expected. (2)

― [―CO―(CH₂)₅―NH―]ₙ- [formula 2]

Formula (3) shows the molecular structure of a polyethyleneterephthalate (PFT) resin. It has no methyl group (CH₃), so that favorable water repellency cannot be expected. (3)

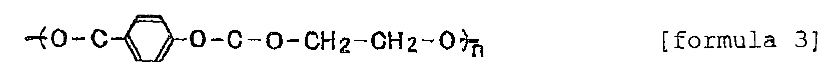

Formula (4) shows the molecular structure of novolak phenol which is a phenol resin, in which a hydroxyl group (OH) is added to a benzene nucleus. As described above, since the small molecular size of the CH bond relative to the benzene produces an uneven molecular form, water physically adheres to the uneven portions. (4)

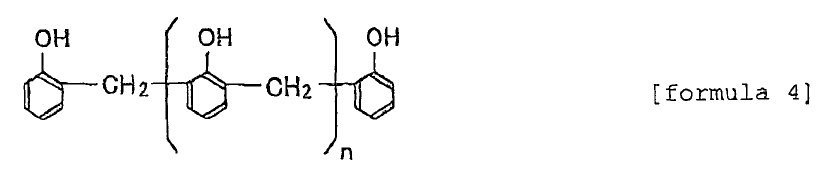

Formula (5) shows the typical molecular structure of polyurethane. Since the polyurethane has the molecular structure close to that of polyamide and is a saturated polyester resin group, it does not have high water repellency. A blend of epoxy resin and polyethyleneterephthalate resin or a blend of epoxy resin and polyurethane resin, a polymer alloy resin or the like may be used as the coat member. (5)

[-O-R'-CO-NH-R"-NH-CO-]n R', R" : organic group (CH3, C6H5 and so on) [formula 5]

However, as described above, most of commercially available resin coat members 5 are slightly water repellent. When leads of a thermistor are bridged with ionic solution such as salt water, the salt water is not removed from the resin coat 5. In addition, if a hydroxyl group (OH) is coordinated with the resin member, it electrically pulls moisture. The salt water adhering between the leads may remain there to cause electrolytic corrosion.

Although these resin members have obvious disadvantages in terms of electrolytic corrosion, they have been used since the resin members are available for use as a coat member are limited. In short, the abovementioned resin members have been used since they can achieve workability for forming a uniform film and they are inexpensive.

The present invention is characterized by the structure shown in Fig. 1. While the structure of a thermistor is substantially identical to those of the axial type shown in Figs. 8 and 9, a resin coat 5 is improved to provide water repellency for the resin having no or insufficient water repellency without deteriorating the properties of the resin. A specific example will be described. The resin coat 5 may be formed of, for example, those presented in formulas (1) to (5), any resin group, any blend agent, or a polymer alloy member.

Inorganic fillers having hydrophobicity or inorganic fillers having hydrophobic groups are added to the resin member before coating. This can change the material property without water repellency to it with water repellent relating to the resin member. In addition, the material property of the resulting resin coat 5 is not deteriorated. Silica (SiO₂) or silica fillers 7 containing organic hydrophobic groups such as methyl groups coordinated with its surface are preferably used as the hydrophobic fillers. The silica fillers 7 added to the resin member have conventionally been used and are not new.

Typically, the silica fillers 7 for reducing the coefficient of thermal expansion of the resin composition or for improving the mechanical strength are a combination of silica having a size of several tens of micrometers or more and silica having a size of several micrometers or less for closest-packed filling. This enables a large amount of silica powder to be contained in the resin. However, in the temperature-sensing device provided by the present invention, particularly for automobiles, a large amount of inorganic filler cannot be added in the resin coat. This is because the resin coat of the temperature sensor is typically formed with a transfer coat method. In short, a drum partially immersed in a liquid resin composition is rotated in a container which contains the resin composition, and the resin composition adheres to the drum surface and is drawn up and transferred to the surface of a glass tube of a temperature sensor. Thus, a large amount of silica powder cannot be added to the resin composition. The addition of silica having a large particle size causes the silica to be settled and isolated in the liquid resin composition. It is necessary that even a small amount of silica can provide hydrophobicity for the surface of the resin coat.

In brief, the surface of the hydrophobic resin coat according to the present invention is desirably provided with water repellency at such a level that any water droplet does not stay between leads but drops therefrom. To this end, the abovementioned hydrophobic fillers may be present on the surface of the coat. The presence of the hydrophobic fillers inside the coat is not essential.

The silica fillers 7 used in the present invention and containing the hydrophobic groups on the surface are schematically shown in Fig. 2. Several saturated methyl groups (CH₃) are coordinated with the surface of the silica fillers 7. The surface of the silica fillers 7 is covered with saturated CH₃ bonding group. The silica fillers 7 having the hydrophobicity are added to the resin member to precipitate the inert hydrophobic fillers on the surface of the coat film 5, thereby causing the surface to have water repellency.

The abovementioned silica fillers containing the methyl groups (CH₃) on the silica surface are commercially available, and manufactured and sold by Nippon Aerosil Co., Ltd, for example. In terms of the intended uses, common products are often used for improving the strength, thixotropy and the like of a resin. While products of a grade with hydrophobicity are on the market as special products, the hydrophobic fillers contained in a resin member and used as a resin reforming material are not known as a coat member of an automobile temperature sensor.

Fillers having hydrophobicity other than the silica include black carbon containing hydrophobic groups on a surface of carbon, fillers containing organic groups with water repellency on a surface of calcium carbonate (CaCO₃), fillers provided by surface treatment of titanium oxide (TiO₂) with a surface-active agent or a coupling agent. Those fillers are expected to provide similar effects.

According to the present invention, even when the leads of the thermistor are bridged with salt water, the water repellency of the hydrophobic groups on the surface of the resin coat 5 prevents the salt water from adhering to the coat member and thus causes the salt water to drop. As a result, the present invention effectively eliminates electrolytic corrosion and errors in temperature measurement due to a leakage of current resulting from the bridging of the leads with the salt water.

### (Example 2)

Fig. 3 shows Example 2 different from Example 1 shown in Fig. 1. Example 2 provides a structure for further improving the effect of hydrophobicity on the surface caused by the hydrophobic fillers contained in the resin member. The axial-type thermistor shown in Fig. 9 is used as the structure of the thermistor of Example 2. The thermistor coated with a resin 5 is further covered with a resin containing fillers having hydrophobic groups as a second layer coat film 8 on the surface of a first layer coat film 7. An example of an epoxy resin used as the coat member 5 will be described. The thermistor is coated with the epoxy resin as the first layer coat film 7.

The epoxy resin is volatilized with a solvent at a temperature before the ring is opened in provisional drying (semi-curing). The surface of the coat after the provisional drying is coated with an epoxy resin of at least 5wt% as the second layer coat film 8 provided by appropriately adding hydrophobic fillers to the same epoxy member before main drying (main-curing). This can achieve the surface including the precipitated hydrophobic fillers with excellent hydrophobicity, so that the coat film can be formed with high water repellency.

### (Example 3)

Another method for realizing Example 1 shown in Fig. 1 will be described. After the entire glass tube 4 including the welded part 6 between the lead wire 3 and the sealing electrode 2 of the thermistor is coated with the resin 5, the solvent is vaporized at a temperature before the epoxy ring is opened, that is, provisional drying is performed. In that state, hydrophobic fillers are caused to adhere to the surface of the resin coat 5 and then main drying is performed. In this manner, the surface can be reformed to have water repellency.

### (Example 4)

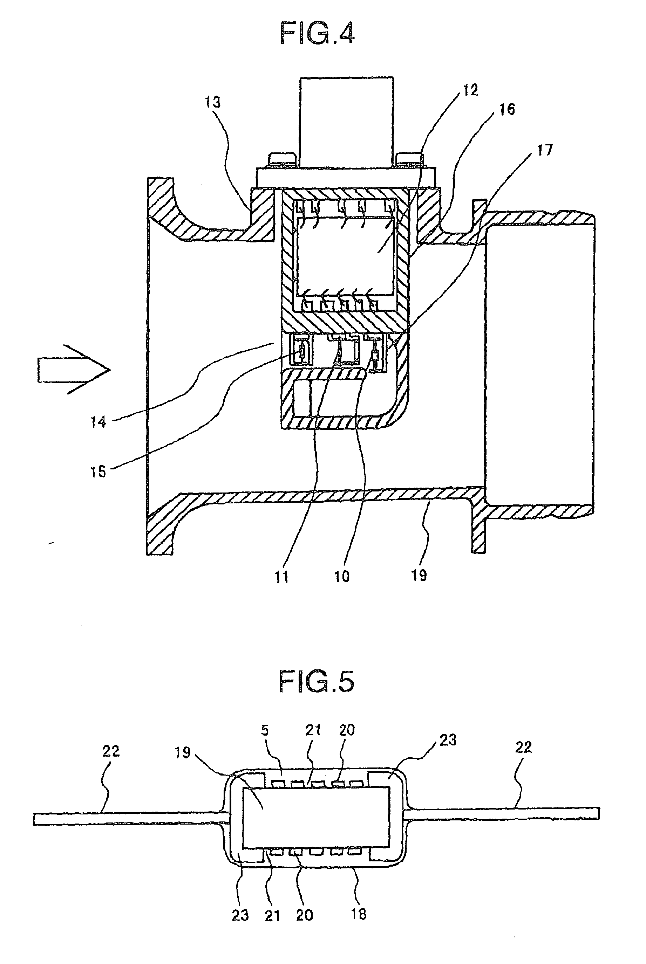

Fig. 4 shows a specific example in which the temperature sensor according to the present invention is mounted as an electronic device on an automobile. Since a number of car-mounted electronic devices exist and all of them cannot be described, a thermal flow meter for measuring an intake air flow shown in Fig. 4 will be taken as a representative example of the car-mounted electronic devices and described in terms of the structure in Example 4 of the present invention.

It goes without saying that the present invention is applicable not only to the thermal flow meter herein presented but also to any temperature sensor for use as a car-mounted electronic device having a different function and a different structure. First, the thermal flow meter will be described briefly. The thermal flow meter is a sensor for measuring intake air and is becoming increasingly popular on the market.

A heating resistor 10 of the thermal air flow meter using the heating resistor 10 and a temperature-sensitive resistor 11 is heated at full time and controlled by a fixed-temperature control circuit 12 such that there is a certain temperature difference between the heating resistor 10 and the temperature-sensitive resistor 11 for measuring the temperature of air. Since the heating resistor 10 is disposed in an air flow, the surface of the heating resistor 10 dissipating heat into the air flow serves as a radiating surface, that is, a heat-transfer surface. The amount of the heat taken into the air flow through the heat transfer is converted into an electric signal to measure the air flow. The entire structure includes a body 13 for taking the intake air and holding the thermal flow meter, in which the heating resistor 10, the temperature-sensitive resistor 11, and a temperature sensor (the thermistor according to the present invention) 15 for measuring the temperature of intake air are disposed in a secondary path 14 into which part of the flow is taken. The resistor components and the fixed-temperature control circuit 12 communicate the electric signal through a terminal 17 formed of a conductive member embedded in a case 16.

The temperature sensor 15 provided by the present invention is disposed in the thermal flow meter as a temperature sensor for measuring the temperature of intake air independently of the thermal flow meter and is not associated with a signal for driving the thermal flow meter. Typically, the signal from the temperature sensor 15 is directly transmitted to a control unit and is used in combustion control of an internal-combustion engine and self-diagnosis in many cases.

When the temperature sensor 15 for measuring the temperature of intake air is subjected to electrolytic corrosion which prevents transmission of a temperature signal, the automobile cannot achieve preferable combustion, and the engine may be stopped. Thus, the car-mounted temperature sensor 15 requires high reliability. For this reason, the structure of the temperature sensor 15 according to the present invention is suitable for the car-mounted electronic device.

### (Example 5)

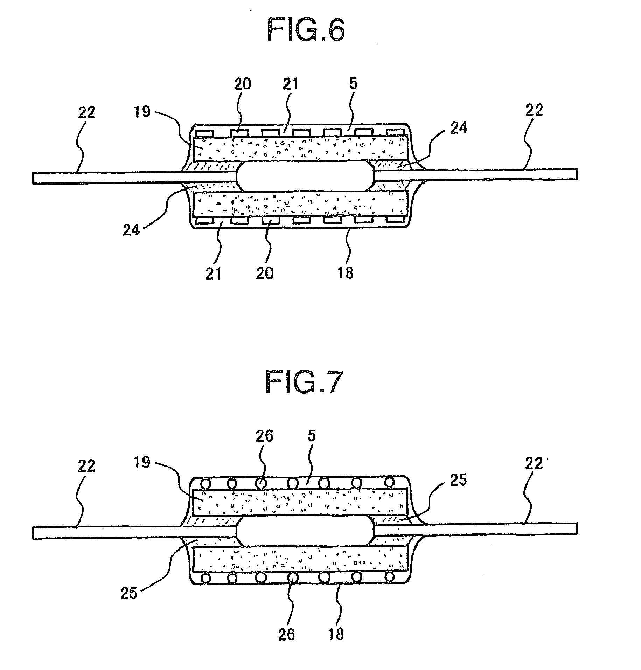

The temperature sensor according to the present invention is applicable not only to the axial-type thermistor but also to other temperature-sensing devices. Such an example will be described with reference to Figs. 5, 6, and 7.

Figs. 5, 6, and 7 show the temperature-sensitive resistor device 11 for detecting the temperature of intake air in order to control the heating resistor device 10 of the thermal flow meter shown in Fig. 4. In Example 5, the resin coat member 5 according to the present invention is used as a protective film 18 of the temperature-sensitive resistor device 11.

The structure of the temperature-sensitive resistor device 11 will hereinafter be described. First, Fig. 5 shows the structure of a cap resistor employed as the temperature-sensitive resistor device 11.

In order to provide the temperature-sensitive resistor device 11 used in the thermal flow meter shown in Fig. 5, a hollow ceramic bobbin with an outer diameter of approximately 0.5 to 2 mm and a length of approximately 2 to 4 mm is used as a body 19. A thin film 20 made of conductive metal is formed on the outer surface of the body 19 with a thin film forming method such as sputtering, vapor deposition, and plasma spraying before calcination, thereby forming the thin film 20 serving as a resistor. After the formation of the thin film (with a thickness of approximately 0.5 to 1 micrometer), laser trimming is performed to provide spiral groves 21 to form a thin-film resistor device with a resistance value of approximately 400 Ω to 1000 kΩ.

On the other hand, a lead wire 22 is made of platinum, or an alloy containing platinum, or pure metal such as nickel, or an alloy of stainless steel or the like, with an outer diameter of approximately 0.15 to 0.2 mm. A cap 23 to which the lead wire 22 is to be bonded is made of stainless steel or the like. After the lead wire 22 is welded thereto, the cap 23 is inserted to or press-fitted to the both ends of the body 19 having the resistor formed thereon. In addition, the resin coat film 5 according to the present invention is formed as the protective film 18 for the thin-film resistor device to cover the resistor, thereby completing the formation of the temperature-sensitive resistor 11.

Fig. 6 shows another form of the temperature-sensitive resistor device 11. A hollow ceramic pipe with an outer diameter of approximately 0.5 to 2 mm and a length of approximately 2 to 4 mm is used as a body 19. A thin film 20 made of conductive metal is formed on the outer surface of the body 19 with a thin film forming method such as sputtering, vapor deposition, and plasma spraying before calcination, thereby forming the thin film 20 serving as a resistor. Then, a lead wire 22 is inserted to both ends of the ceramic pipe body 19 with a conductive adhesive 24 before calcination. In this manner, the lead wire 22 and the body 19 are bonded and fixed with the conductivity maintained. Laser trimming is performed to provide spiral groves 21 to form the temperature-sensitive resistor 11 provided by the thin-film resistor with a resistance value of approximately 400 Ω to 1000 kΩ. Finally, the resin coat film 5 according to the present invention is formed as a protective film 18 for the temperature-sensitive resistor 11 to cover the resistor, thereby completing the formation of the temperature-sensitive resistor 11.

Fig. 7 also shows another form of the temperature-sensitive resistor device 11. A hollow ceramic pipe with an outer diameter of approximately 0.5 to 2 mm and a length of approximately 2 to 4 mm is used as a body 19. A lead wire 22 is bonded and fixed to the both ends of the ceramic pipe body 19 with a conductive glass adhesive 25. A resistor wire 26 made of conductive metal is spirally wound around the surface of the body 19 beginning with the lead wire 22. Since the resistance value depends on the turn of the resistor wire 26, the number of turns can be controlled at a predetermined number to provide an intended resistance value.

The resin coat film 5 according to the present invention is formed as a protective film 18 for the temperature-sensitive resistance device 11 to cover the resistor, thereby completing the formation of the temperature-sensitive resistance device 11.

According to the present invention, it is possible to manufacture a temperature sensor which has high reliability under corrosive environments and which is reliably used as a temperature sensor for automobiles, plant facilities, industrial equipment, and consumer products.

It should be further understood by those skilled in the art that although the foregoing description has been made on embodiments of the invention, the invention is not limited thereto and various changes and modifications may be made without departing from the spirit of the invention and the scope of the appended claims.

The above features and/or embodiments can be combined partly or as a whole in any way.

### Advantages of the Invention

The present invention can provide a temperature-sensing device such as a temperature sensor with resistance to corrosion for automobiles and the like exposed to harsh environments.

## Claims

1. A temperature-sensing device comprising: an element with a resistance value varying with a temperature change;
a lead extending on the axis of the element; and
a resin coat (5) surrounding the element,
wherein a number of hydrophobic inorganic fillers with an average particle size of 5 µm or less exist on a surface of the resin coat (5).

2. The temperature-sensing device according to claim 1, wherein the hydrophobic inorganic fillers have an average particle size of 2 µm or less.

3. The temperature-sensing device according to claim 1, wherein the hydrophobic inorganic fillers have an average particle size of 0.1 to 1 µm.

4. The temperature-sensing device according to at least one of claims 1-3, wherein the inorganic fillers comprise silica (SiO₂).

5. The temperature-sensing device according to at least one of claims 1-4, wherein an organic hydrophobic group is coordinated with the surface of the inorganic fillers.

6. The temperature-sensing device according to at least one of claims 1-5, wherein the inorganic fillers having the organic hydrophobic group consisting of silica (SiO₂), calcium carbonate (CaCO₃), carbon, or titanium oxide (TiO₂).

7. The temperature-sensing device according to at least one of claims 1-6, wherein the ratio of the hydrophobic inorganic fillers to the resin ranges from 1 to 50 wt%.

8. The temperature-sensing device according to at least one of claims 1-7, further comprising a resin coat (5) covering at least a connecting portion between the element and the lead or a resin coat (5) formed on an undercoat formed on a surface of the element, wherein the resin coat (5) includes the dispersed hydrophobic inorganic fillers.

9. The temperature-sensing device according to at least one of claims 1-8, wherein the undercoat and the resin coat (5) are made of the same type of resin material.

10. The temperature-sensing device according to at least one of claims 1-9, wherein fillers having a hydrophobic group are caused to adhere to the surface of the resin coat (5).

11. A temperature sensor comprising:
an element having a resistance value varying with a temperature change;
a sealing electrode (2) electrically connected to each of both ends of the element;
a lead wire (3, 22) electrically connected to each of the sealing electrodes (2) and extending on the axis direction of a composite body formed of the element and the sealing electrodes (2); an inorganic insulating member surrounding the element and covering at least part of the sealing electrodes to fix the element and the sealing electrodes (2); and
a resin coat (5) covering at least a connecting portion between the electrode and the lead wire (3, 22),
wherein a number of hydrophobic inorganic fillers with an average particle size of 5 µm or less exist on a surface of the resin coat (5).

12. The temperature sensor according to claim 11, wherein the hydrophobic inorganic fillers have an average particle size of 2 µm or less.

13. The temperature sensor according to claim 11, wherein the hydrophobic inorganic fillers have an average particle size of 0.1 to 1 µm.

14. The temperature sensor according to at least one of claims 11-13, wherein the inorganic fillers comprise silica (SiO₂).

15. The temperature sensor according to at least one of claims 11-14, wherein an organic hydrophobic group is coordinated with the surface of the inorganic fillers.

16. The temperature sensor according to at least one of claims 11-15, wherein the inorganic fillers having the organic hydrophobic group consisting of silica (SiO₂), calcium carbonate (CaCO₃), carbon, or titanium oxide (Ti0₂).

17. The temperature sensor according to at least one of claims 11-16, wherein the compounding ratio of the hydrophobic inorganic fillers to the resin is from 1 to 50 wt%.

18. The temperature sensor according to at least one of claims 11-17, further comprising a resin coat (5) covering at least a connecting portion between the element and the lead or a resin coat (5) formed on an undercoat formed on a surface of the inorganic insulating member, wherein the resin coat (5) includes the dispersed hydrophobic inorganic fillers.

19. The temperature sensor according to at least one of claims 11-18, wherein the undercoat end the resin coat (5) are made of the same type of resin material.

20. The temperature sensor according to at least one of claims 11-19, wherein fillers having a hydrophobic group are caused to adhere to the surface of the resin coat (5).
